# EUROPÄISCHE PATENTSCHRIFT

(11) **EP 2 118 522 B1**
(45) Veröffentlichungstag und Bekanntmachung des Hinweises auf die Patenterteilung: **20.10.2010**
(21) Anmeldenummer: 08715508.1
(22) Anmeldetag: 22.02.2008
(51) Int. Cl.: F16H 37/08, F16H 47/04

(54) **VERFAHREN ZUR STEUERUNG UND/ODER REGELUNG EINES HYDROSTATISCH-MECHANISCHEN LASTSCHALTGETRIEBES**
METHOD FOR CONTROLLING AND/OR REGULATING A HYDROSTATIC-MECHANICAL POWER SHIFT TRANSMISSION
PROCEDE DE COMMANDE ET/OU DE REGULATION D'UNE TRANSMISSION HYDROSTATIQUE-MECANIQUE COUPLABLE SOUS CHARGE

(30) Priorität: 07.03.2007 DE 102007011379
(43) Veröffentlichungstag der Anmeldung: 18.11.2009
(73) Patentinhaber: Hytrac GmbH, 45139 Essen (DE)
(72) Erfinder: TOLKSDORF, Detlef, 45141 Essen (DE); TOLKSDORF, Thomas, 45141 Essen (DE)
(74) Vertreter: Döpp, Ludger
(86) Internationale Anmeldenummer: PCT/DE2008/000316
(87) Internationale Veröffentlichungsnummer: WO 2008/106929

(56) Entgegenhaltungen:
- DE-A1- 4 404 829
- US-A- 3 442 153
- US-A- 4 896 563

## Beschreibung

Die Erfindung betrifft ein Verfahren zur Ansteuerung eines hydrostatischmechanische Lastschaltgetriebes.

In der gattungsgemäßen DE 44 04 829 C2 wird ein hydrostatisch-mechanisches Lastschaltgetriebe und ein Verfahren zur Steuerung desselben beschrieben. Hierbei werden in einem ersten Fahrbereich zur Addition der Drehmomente die Eingangswellen von zwei Hydromotore miteinander kraftschlüssig über eine Kupplung verbunden und auf das Sonnenrad eines Planetengetriebes geführt. In einem zweiten Fahrbereich wird einer der beiden Hydromotore von dem Sonnenrad entkuppelt und kraftschlüssig auf das Hohlrad des Planetengetriebe geschaltet, zur Addition der Drehzahlen entsprechend dem Überlagerungsprinzip.

Gegenüber dem in der DE 44 04 829 C2 zitierten Stand der Technik erscheint diese Lösung vorteilhaft, im Hinblick auf die Leistungsfähigkeit, Baugröße, Leistungsdichte und insbesondere der Schaltqualität beim Gangwechsel. Auch wenn hier bereits eine positive Weiterentwicklung bezüglich der Verfahren zur Steuerung und Regelung des Fahrantriebes und der Gangschaltung von hydrostatisch-mechanischen Lastschaltgetrieben erreicht worden ist, erscheint jedoch nachteilig, dass bei diesem Konzept im zweiten Fahrbereich ausschließlich im Überlagerungsbetrieb gefahren wird, weshalb resultierend die beiden Hydromotore grundsätzlich mit unterschiedlichen Drehmomenten und überwiegend mit unterschiedlichen Drehzahlen betrieben werden müssen. Die Steuerung und Regelung unterschiedlicher Drehmomente und unterschiedlicher Drehzahlen von zwei Hydromotore an einem Lastschaltgetriebe erscheint technisch aufwendig und kompliziert, so dass kommerzieller Aufwand in die Herstellung der Steuerung und Regelung investiert werden muss.

Ziel des Erfindungsgegenstandes ist es, den Stand der Technik dahingehend weiterzubilden, indem das Verfahren zur Steuerung und Regelung des Fahrantriebes und der Gangschaltung eines hydrostatisch-mechanischen Lastschaltgetriebes so vereinfacht wird, dass - ohne Hinzufügung weiterer Konstruktionselemente - der Schaltvorgang dergestalt verbessert wird, dass die prinzipbedingten Vorteile des Überlagerungsgetriebes ausgenutzt und dessen prinzipielle Nachteile in den möglichen Betriebsfällen weitestgehend ausgeschlossen werden.

Dieses Ziel wird erreicht durch ein Verfahren zur Ansteuerung eines hydrostatisch-mechanischen Lastschaltgetriebes, das folgende Komponenten beinhalten: eine Regel- und/oder Steuerungseinheit, mindestens zwei Hydraulikantriebsmotore, mindestens zwei Eingangswellen, Kupplungen und eine einzelne Planetenradstufe, bestehend aus Sonnenrad, Hohlrad, Steg sowie Planetenrädern und mindestens eine Abtriebswelle, indem im Anschluss an einen drehzahladditiven Fahrbereich die Kupplungen so geschaltet werden, dass das Hohlrad und das Sonnenrad kraftschlüssig miteinander verbunden sind.

Vorteilhafte Weiterbildungen des Erfindungsgegenstandes sind den zugehörigen verfahrensgemäßen Unteransprüchen zu entnehmen.

Mit dem erfindungsgemäßen Verfahren sind eine Reihe unterschiedlichster Betriebsweisen eines hydrostatisch mechanischen Lastschaltgetriebes denkbar:
Eine Variante besteht darin, dass im Anschluss an einen drehzahladditiven Fahrbereich die Drehzahlen der Eingangswellen synchronisiert und die Kupplungen so geschaltet werden, dass das Hohlrad und das Sonnenrad kraftschlüssig miteinander verbunden sind.

Eine weitere Variante besteht darin, dass während der Synchronisation der Drehzahlen der Eingangswellen der jeweils schneller drehende Hydraulikantriebsmotor bezüglich seiner Drehzahl heruntergeregelt wird und der jeweils langsamer drehende Hydraulikantriebsmotor eine Drehzahlerhöhung erfährt, die im Wesentlichen dem herunter geregelten Wert des ersten, nämlich schnelleren Hydraulikantriebsmotors entspricht.

Ebenfalls denkbar ist, dass während der Synchronisation der Drehzahlen der Eingangswellen einer der beiden Hydraulikantriebsmotore bezüglich seiner Drehzahl im Wesentlichen unverändert bleibt und der andere Hydraulikantriebsmotor im Wesentlichen an die Drehzahl des einen Hydraulikantriebsmotors angepasst wird.

Gemäß Merkmalen des erfindungsgemäßen Verfahrens kann im Anschluss an einen drehzahladditiven Fahrbereich, bei dem die vorhandenen Kupplungen so geschaltet werden, dass das Hohlrad und das Sonnenrad gegeneinander blockiert sind, folglich nun wieder drehmomentadditiv, aber bei kleinerer Übersetzung für hohe Geschwindigkeitsbereiche, gefahren werden.

Die Umschaltung vom drehzahladditiven Fahrbereich auf den drehmomentadditiven Fahrbereich erfolgt dergestalt, dass beispielsweise der jeweils schneller drehende Motor bezüglich seiner Drehzahl heruntergeregelt bzw. -gesteuert wird und der jeweils langsamer drehende Motor eine Drehzahlerhöhung erfährt, die im Wesentlichen dem herunter geregelten Wert des ersten, nämlich schnelleren, Motors entspricht.

Aufgrund der dadurch gegebenen Konstanz der Summe beider Drehzahlen, bleibt somit die Getriebeausgangsdrehzahl auch konstant, bzw. erhöht sich, wenn die Regelung/Steuerung so eingestellt wird, dass sich während des Synchronisationsvorganges die Gesamtsumme beider Drehzahlen und damit auch die Ausgangsdrehzahl erhöht.

Der Erfindungsgegenstand ist anhand eines Ausführungsbeispiels in der Zeichnung dargestellt und wird wie folgt beschrieben. Es zeigen
- Figur 1: Prinzipskizze eines hydrostatisch-mechanischen Lastschaltgetriebes, auf welches das erfindungsgemäße Verfahren zur Steuerung und/oder Regelung des Fahrantriebes und der Gangschaltung von hydrostatisch-mechanischen Lastschaltgetrieben angewendet wird;
- Figuren 2 und 3: Ablauf-Schema des erfindungsgemäßen Verfahrens zur Steuerung und Regelung des Fahrantriebes und der Gangschaltung eines hydrostatisch-mechanischen Lastschaltgetriebes.

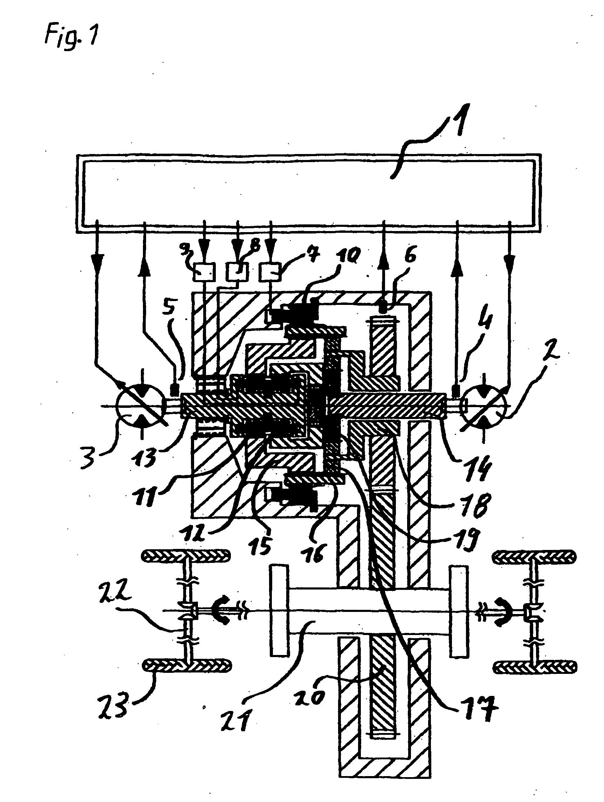

Figur 1 zeigt als Prinzipskizze ein hydrostatisch-mechanisches Lastschaltgetriebe auf welches das erfindungsgemäße Verfahren zur Steuerung und Regelung des Fahrantriebes und der Gangschaltung von hydrostatisch-mechanischen Lastschaltgetrieben Anwendung findet. Folgende wesentliche Komponenten sind dargestellt, ohne dass der Erfindungsgegenstand auf diese Ausführungsform beschränkt ist:

Eine Regel- und/oder Steuerungseinheit 1, zwei Hydraulikantriebsmotore 2,3, drei Drehzahlsensoren 4,5,6, drei Kupplungsschaltventile 7,8,9, drei Kupplungen 10,11,12, zwei Eingangswellen 13,14, ein mechanisches Übertragungselement 15, ein Hohlrad 16, Planetenräder 17, ein Steg 18, ein Sonnenrad 19, eine Stirnradstufe 20, eine Abtriebswelle 21, Achsen 22 und Räder 23.

Die Regel- und/oder Steuerungseinheit 1 nimmt die Messwerte der Drehzahlsensoren 4,5,6 auf, errechnet entsprechende Stellgrößen für die Hydraulikantriebsmotore 3,4 und regelt/steuert diese entsprechend an. Ausgehend von einem zweiten Fahrbereich im Überlagerungsbetrieb, bei dem die Kupplungen 10 und 12 geöffnet sind, die Kupplung 11 aber kraftschlüssig geschlossen ist, wird hierbei die Drehzahl des schnelleren Motors, beispielsweise des Hydraulikantriebsmotors 2, reduziert und dieser reduzierte Drehzahlwert solange auf die Stellgröße des langsameren Motors, in diesem Fall des Hydraulikbetriebsmotors 3, addiert, bis der Drehzahlunterschied der beiden Eingangswellen 13,14 das kraftschlüssige Schalten der Kupplung 12 möglich macht. In diesem Betriebszustand wird das Planetengetriebe in einen Blockierungsbetrieb betrieben, dergestalt, dass das Sonnenrad 19 über das mechanische Übertragungselement 15 mit dem Hohlrad 16 kraftschlüssig verbunden ist. Die Planetenräder 17 drehen sich nun nicht mehr um ihre eigene Achse, sondern wirken als Mitnehmer für den Steg 18, der über die Stirnradstufe 20 auf die Abtriebswelle 21, bzw. die Achsen 22 und die Räder 23 treibt. Die Eingangswellen 13,14 sind somit kraftschlüssig verbunden und die Ansteuerung sowie Regelung beider Hydraulikantriebsmotore 2,3 ist vereinfacht möglich.

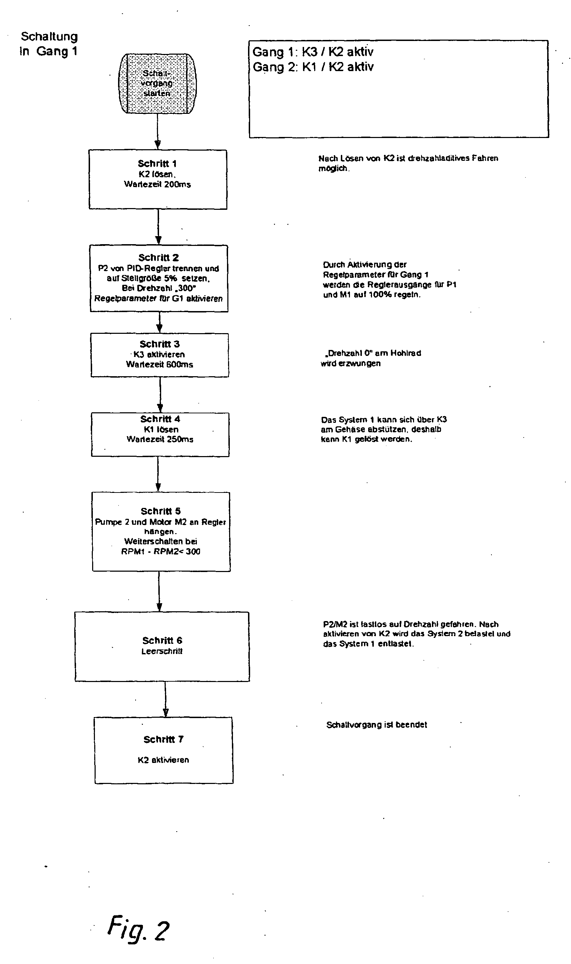

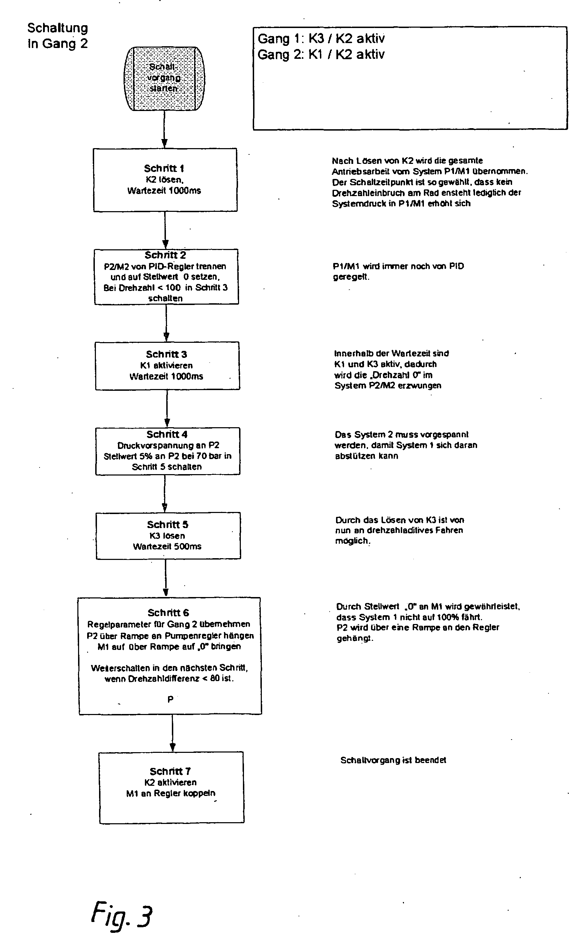

Die Figuren 2 und 3 zeigen ein beispielhaftes Ablaufschema des erfindungsgemäßen Verfahrens zur Steuerung und Regelung des Fahrantriebes und der Gangschaltung des hydrostatisch-mechanischen Lastschaltgetriebes gemäß Figur 1.

Figur 2 zeigt den Schaltvorgang in Gang 1, während Figur 3 den Schaltvorgang in Gang 2 verdeutlicht.

### Bezugszeichen

- 1: Regel- und/oder Steuerungseinheit
- 2: Hydraulikantriebsmotor
- 3: Hydraulikantriebsmotor
- 4: Drehzahlsensor
- 5: Drehzahlsensor
- 6: Drehzahlsensor
- 7: Kupplungsschaltventil
- 8: Kupplungsschaltventil
- 9: Kupplungsschaltventil
- 10: Kupplung
- 11: Kupplung
- 12: Kupplung
- 13: Eingangswelle
- 14: Eingangswelle
- 15: Übertragungselement
- 16: Hohlrad
- 17: Planetenrad
- 18: Steg
- 19: Sonnenrad
- 20: Stirnradstufe
- 21: Abtriebswelle
- 22: Achse
- 23: Rad

## Patentansprüche

1. Verfahren zur Ansteuerung eines hydrostatisch - mechanischen Lastschaltgetriebes, das folgende Komponenten beinhaltet: eine Regel- und/oder Steuerungseinheit (1), mindestens zwei Hydraulikantriebsmotore (2,3), mindestens zwei Eingangswellen (13,14), Kupplungen (10,11,12) und eine einzelne Planetenradstufe, bestehend aus Sonnenrad (19), Hohlrad (16), Steg (18) sowie Planetenrädern (17) und mindestens einer Abtriebswelle (21), wobei das Sonnenrad (19) und das Hohlrad (16) als Eingänge der Planetenradstufe verwendet werden und der Steg (18) als Ausgang der Planetenradstufe verwendet wird, **dadurch gekennzeichnet, dass** im Anschluss an einen drehzahladditiven Fahrbereich die Kupplungen (10,11,12) so geschaltet werden, dass das Hohlrad (16) und das Sonnenrad (19) kraftschlüssig miteinander verbunden sind.

2. Verfahren nach Anspruch 1, **dadurch gekennzeichnet, dass** im Anschluss an einen drehzahladditiven Fahrbereich die Drehzahlen der Eingangswellen (13,14) synchronisiert und die Kupplungen (10,11,12) so geschaltet werden, dass das Hohlrad (16) und das Sonnenrad (19) kraftschlüssig miteinander verbunden sind.

3. Verfahren nach Anspruch 2, **dadurch gekennzeichnet, dass** die Synchronisation der Drehzahlen der Eingangswellen (13,14) unmittelbar nach einem Schaltvorgang von einem ersten drehmomentenadditiven Fahrbereich in einen drehzahladditiven Fahrbereich eingeleitet wird.

4. Verfahren nach einem der Ansprüche 1 bis 3, **dadurch gekennzeichnet, dass** in einen weiteren drehmomentenadditiven Fahrbereich geschaltet wird, indem bei nahezu synchroner Drehzahl der Eingangswellen (13,14) mindestens eine Kupplung (11,12) kraftschlüssig geschlossen und mindestens eine weitere Kupplung (10) geöffnet wird.

5. Verfahren nach einem der Ansprüche 1 bis 4, **dadurch gekennzeichnet, dass** während der Synchronisation der Drehzahlen der Eingangswellen (13,14) der jeweils schneller drehende Hydraulikantriebsmotor (2,3;3,2) bezüglich seiner Drehzahl heruntergeregelt wird und der jeweils langsamer drehende Hydraulikantriebsmotor (3,2;2,3) eine Drehzahlerhöhung erfährt, die im Wesentlichen dem heruntergeregelten Wert des ersten, nämlich schnelleren Hydraulikantriebsmotors (2,3;3,2) entspricht.

6. Verfahren nach einem der Ansprüche 1 bis 4, **dadurch gekennzeichnet, dass** während der Synchronisation der Drehzahlen der Eingangswellen (13,14) einer der beiden Hydraulikantriebsmotore (2,3) bezüglich seiner Drehzahl im Wesentlichen unverändert bleibt und der andere Hydraulikantriebsmotor (3,2) im Wesentlichen an die Drehzahl des einen Hydraulikantriebsmotors (2,3) angepasst wird.

7. Verfahren nach einem der Ansprüche 1 bis 6, **dadurch gekennzeichnet, dass** aufgrund einer über die Regel- und/oder Steuerungseinheit (1) errechneten Summe beider Drehzahlen der Eingangswellen (13,14) die Getriebeausgangsdrehzahl konstant geregelt/gesteuert wird.

8. Verfahren nach einem der Ansprüche 1 bis 7, **dadurch gekennzeichnet, dass** sich die Summe beider Drehzahlen der Eingangswellen (13,14) und die Drehzahl der Abtriebswelle (21) während des Synchronisationsvorgangs der Eingangswellen (13,14) erhöht.

9. Verfahren nach einem der Ansprüche 1 bis 7, **dadurch gekennzeichnet, dass** sich die Summe beider Drehzahlen der Eingangswellen (13,14) und die Drehzahl der Abtriebswelle (21) während des Synchronisationsvorgangs der Eingangswellen (13,14) reduziert.

## Claims

1. A method for triggering a hydrostatic mechanical torque-splitting transmission which comprises the following components: an automatic control and/or control unit (1), at least two hydraulic driving motors (2, 3), at least two input shafts (13, 14), clutches (10, 11, 12) and a single planet wheel stage composed of a sun wheel (19), a ring gear (16), a web (18) as well as planet wheels (17) and at least one output shaft (21), wherein the sun wheel (19) and the ring gear are used as entries of the planet wheel stage and the web (18) is used as exit of the planet wheel stage, **characterized in that** subsequent to a rotational speed additive range the clutches (10, 11, 12) are thrown-in such that the ring gear (16) and the sun wheel (19) are connected to each other in a non-positive way.

2. A method according to claim 1, **characterized in that** subsequent to a rotational speed additive range the rotational speeds of the input shafts (13, 14) are synchronized and the clutches (10, 11, 12) are thrown-in such that the ring gear (16) and the sun wheel (19) are connected to each other in a non-positive way.

3. A method according to claim 2, **characterized in that** the synchronization of the rotational speeds of the input shafts (13, 14) will be started immediately after a shifting operation from a first torque additive speed range into a rotational speed additive range.

4. A method according to one of the claims 1 through 3, **characterized in that** a shifting to another torque additive speed range will be realized **in that** with a nearly synchronous rotational speed of the input shafts (13, 14) at least one clutch (11, 12) will be non-positively closed and at least one other clutch (10) will be opened.

5. A method according to one of the claims 1 through 4, **characterized in that** during the synchronization of the rotational speeds of the input shafts (13, 14) the hydraulic driving motor (2, 3; 3, 2) which respectively rotates faster will be slowed down with respect to the rotational speed thereof and the rotational speed of the hydraulic driving motor which respectively rotates more slowly will be increased to a value that essentially corresponds to the slowed down value of the first, namely faster hydraulic driving motor (2, 3; 3, 2).

6. A method according to one of the claims 1 through 4, **characterized in that** during the synchronization of the rotational speeds of the input shafts (13, 14) one of the two hydraulic driving motors (2, 3) will remain essentially unchanged with respect to the rotational speed thereof and the other hydraulic driving motor (3, 2) will be essentially adapted to the rotational speed of the one hydraulic driving motor (2, 3).

7. A method according to one of the claims 1 through 6, **characterized in that** due to a sum of both rotational speeds of the input shafts (13, 14) calculated by means of the automatic control and/or control unit (1) the gear output rotational speed will be constantly automatically controlled/controlled.

8. A method according to one of the claims 1 through 7, **characterized in that** the sum of both rotational speeds of the input shafts (13, 14) and the rotational speed of the output shaft (21) increase during the synchronization operation of the input shafts (13, 14).

9. A method according to one of the claims 1 through 7, **characterized in that** the sum of both rotational speeds of the input shafts (13, 14) and the rotational speed of the output shaft (21) decrease during the synchronization operation of the input shafts (13, 14).

## Revendications

1. Procédé de commande d'une transmission hydrostatique-mécanique couplable sous charge et comprenant les composants suivants : une unité de réglage et/ou de commande (1), au moins deux moteurs d'entraînement hydraulique (2, 3), au moins deux arbres d'entrée (13, 14), des embrayages (10, 11, 12) et une étape individuelle de pignons satellites composée d'une roue solaire (19), d'une couronne de train planétaire (16), d'une entretoise (18) ainsi que des roues planétaires (17) et au moins d'un arbre de sortie (21), la roue solaire (19) et la couronne de train planétaire (16) étant utilisées comme des entrées de l'étape de pignons satellites et l'entretoise (18) étant utilisé comme sortie de l'étape de pignons satellites, **caractérisé en ce que** faisant suite à une gamme de vitesse dans laquelle on additionne les vitesses de rotation, on embraie les embrayages (10, 11, 12) de sorte que la couronne de train planétaire (16) et la roue solaire (19) sont reliées l'une à l'autre de manière à former une adhérence.

2. Procédé selon la revendication 1, **caractérisé en ce que** faisant suite à une gamme de vitesse dans laquelle on additionne les vitesses de rotation, on synchronise les vitesses de rotation des arbres d'entrée (13, 14) et on embraie les embrayages (10, 11, 12) de sorte que la couronne de train planétaire (16) et la roue solaire (19) sont reliées l'une à l'autre de manière à former une adhérence.

3. Procédé selon la revendication 2, **caractérisé en ce qu'**on déclenche la synchronisation des vitesses de rotation des arbres d'entrée (13, 14) immédiatement après avoir passé d'une première gamme de vitesse dans laquelle on additionne les couples de rotation à une gamme de vitesse dans laquelle on additionne les vitesses de rotation.

4. Procédé selon l'une des revendications 1 à 3, **caractérisé en ce qu'**on passe à une autre gamme de vitesse dans laquelle on additionne les couples de rotation en fermant au moins un embrayage (11, 12) de manière à former une adhérence et en ouvrant au moins un autre embrayage (10) quand les vitesses de rotation des arbres d'entrée (13, 14) sont presque synchrones.

5. Procédé selon l'une des revendications 1 à 4, **caractérisé en ce que** pendant la synchronisation des vitesses de rotation des arbres d'entrée (13, 14) le moteur d'entraînement hydraulique (2, 3 ; 3, 2) qui tourne respectivement plus vite est ralenti par rapport à sa vitesse de rotation et la vitesse de rotation du moteur d'entraînement hydraulique (3, 2 ; 2, 3) qui tourne respectivement moins vite est augmentée à une valeur qui correspond essentiellement à la valeur ralentie du premier moteur d'entraînement hydraulique (2, 3 ; 3, 2) plus vite.

6. Procédé selon l'une des revendications 1 à 4, **caractérisé en ce que** pendant la synchronisation des vitesses de rotation des arbres d'entrée (13, 14) l'un des deux moteurs d'entraînement hydraulique (2, 3) reste essentiellement inaltéré par rapport à sa vitesse de rotation et l'autre moteur d'entraînement hydraulique (3, 2) sera essentiellement adapté à la vitesse de rotation de l'un moteur d'entraînement hydraulique (2, 3).

7. Procédé selon l'une des revendications 1 à 6, **caractérisé en ce qu'**à la base d'une somme des deux vitesses de rotation des arbres d'entrée (13, 14) calculée par l'unité de réglage et/ou de commande (1) la vitesse de rotation de sortie de la transmission sera réglée/commandée constamment.

8. Procédé selon l'une des revendications 1 à 7, **caractérisé en ce que** la somme des deux vitesses de rotation des arbres d'entrée (13, 14) et la vitesse de rotation de l'arbre de sortie (21) seront augmentées pendant l'étape de synchronisation des arbres d'entrée (13, 14).

9. Procédé selon l'une des revendications 1 à 7, **caractérisé en ce que** la somme des deux vitesses de rotation des arbres d'entrée (13, 14) et la vitesse de rotation de l'arbre de sortie (21) seront réduites pendant l'étape de synchronisation des arbres d'entrée (13, 14).
